# EUROPEAN PATENT SPECIFICATION

(11) **EP 0 620 693 B1**
(45) Date of publication and mention of the grant of the patent: **20.09.2006**
(21) Application number: 94302220.2
(22) Date of filing: 28.03.1994
(51) Int. Cl.: H04Q 3/00

(54) **Telecommunications switch control**
Fernsprechvermittlungssteuerung
Contrôleur de commutateur pour télécommunications

(30) Priority: 14.04.1993 GB 9307647
(43) Date of publication of application: 19.10.1994
(73) Proprietor: Ericsson AB, 164 83 Stockholm (SE)
(72) Inventor: Weiner, Steven Michael, Walsgrave, Coventry CV2 2HN (GB); Tavanyar, Simon Edwin, Altamonte Springs, Florida 32714 (US); Sanders, Jeffrey Allen, Plano, Texas 75025 (US)
(74) Representative: Stasiewski, Piotr Grzegorz

(56) References cited:
- GLOBECOM '93, vol.3, 29 November 1993, HOUSTON US pages 1911 - 1917, XP436141 YANG ET AL. 'The design and implementation of a Service Logic Execution Environment platform'
- INTERNATIONAL SWITCHING SYMPOSIUM, vol.5, 28 May 1990, STOCKHOLM SE pages 143 - 146, XP130939 SAGE 'An Application Programming Interface for the Intelligent Network'
- GLOBECOM '92, vol.1, 6 December 1992, ORLANDO US pages 549 - 553, XP357843 OHARA ET AL. 'Evaluation of the service execution environment & the service development environment for AIN'
- INTERNATIONAL SWITCHING SYMPOSIUM, vol.1, 25 October 1992, YOKOHAMA JP pages 268 - 272, XP337657 FUJINAGA ET AL. 'Implementing IN Functional Entities on top of distirbuted operating system'
- SHIMOGAKI T ET AL.: "Development of Intelligent Network System" NEC RESEARCH AND DEVELOPMENT, vol. 34, no. 1, January 1993 (1993-01), pages 109-121, XP000363015 Tokyo, JP

## Description

The present invention relates to a Switch Control of a Service Logic Execution Environment (SLEE), allowing the rest of the SLEE and the Service Logic Programs (SLPs) running above it to be independent of the switch to which they are connected. This is achieved by designing the Switch Control to contain 'mix and match' modules which each perform well-defined functions.

"An Application Programming Interface for the Intelligent Network", by C J Sage, published in International Switching Symposium, vol.5, 28 May 1990, Stockholm, SE, pages 143-146, refers to a major objective of the Intelligent Network being the rapid introduction of new services in a multi-vendor environment. The Application Programming Interface enables the applications programmer to write services or service features that can be installed on any vendors Service Control Point (SCP) without a detailed knowledge of the underlying hardware or software environment.

"Development of Intelligent Network System" by T Shimogaki et al. deals with some aspects of inter-node communications between SCP and SSP, but solution as in the invention now to be described is neither disclosed nor suggested in this prior art document.

According to the present invention there is provided a telecommunications switching system comprising a Service Control Point and a Switch connected to one another, the Service Control Point including a Service Logic Execution Environment, Service Logic Programsand an Operating System, the Service Logic Execution Environment comprising a Switch Control and the rest of the Service Logic Execution Environment, the Switch Control forming an interface for the Service Logic Execution Environment and wherein means are provided whereby the rest of the Service Logic Execution Environment and the Service Logic Programs run above the Switch Control and whereby the rest of the Service Logic Execution Environment and Service Logic Programs are independent of the Switch to which they are connected and at least one of the components of the Switch Control is dependent on the Switch to which it is connected and the Service Logic Execution Environment is adapted to provide protection for the Service Logic Programs from changes in the Operating System and wherein the Switch Control is adapted to convert messages between a block structure format used within the rest of the Service Logic Execution Environment and a transfer syntax for communicating with the Switch.

The present invention will now be described, by way of example, with reference to the accompanying drawings, in which :-
Figure 1 shows a diagrammatic view of a Switch within an Intelligent Network (IN) configuration;
Figure 2 shows a diagrammatic representation of Switch Control Configurations within the SLEE;
Figure 3 is a block diagram illustrating the transmission of a message from an SLEE to a switch; and
Figure 4 is a block diagram illustrating the receipt of a message from a switch to the SLEE.

This forms part of an Advanced Intelligent Networks (AIN) Service Logic Execution Environment (SLEE) which itself forms a part of an Adjunct and Service Control Point (SCP) system. The SLEE developed from the requirements set out by Bellcore in the following publications:
1. FR-NWT-001132, AIN Release 1 Service Logic Program Framework Generic Requirements
2. TA-NWT-001124, AIN Release 1 SLEE Generic Requirements

The SLEE provides a higher-level layer of functionality above the Operating System (OS) protecting the service implementations above from changes in the OS, and providing them with more telecommunications oriented functionality than a general-purpose OS.

Services are implemented above the SLEE as a number of Service Logic Programs (SLPs) which make use of the Bellcore defined Application Programming Interface (API) presented by the SLEE.

An important part of the SLEE is the Switch Control function which handles the protocols and higher level messages used between the Service Switching Point (SSP or Switch) and the Service Control Point (SCP).

As typically a number of switches (SSPs) are supported with different SSP/SCP message sets, some standard and some proprietary, carried over different communication channels, it is important that the switch control function within the SLEE is such that a variety of message sets and communication channels be supported without severely impacting either the design of the switch control function itself, or the Service Logic Programs running on the SLEE. By achieving this, there is the ability to write Service Logic Programs which are independent of the SSP message set and communication channel.

The current requirement is for a SLEE, and therefore the switch control part of it also, to be designed to interface to a specific switch. The ability to give service developers independence from the particular target switch used, by designing the switch control function to hold a set of mix and match modules, is provided.

Switch Control forms the interface between the SLEE and the various Switches to which the SLEE is connected. This interface is a modularised interface allowing the selection of different message sets and different physical interfaces.

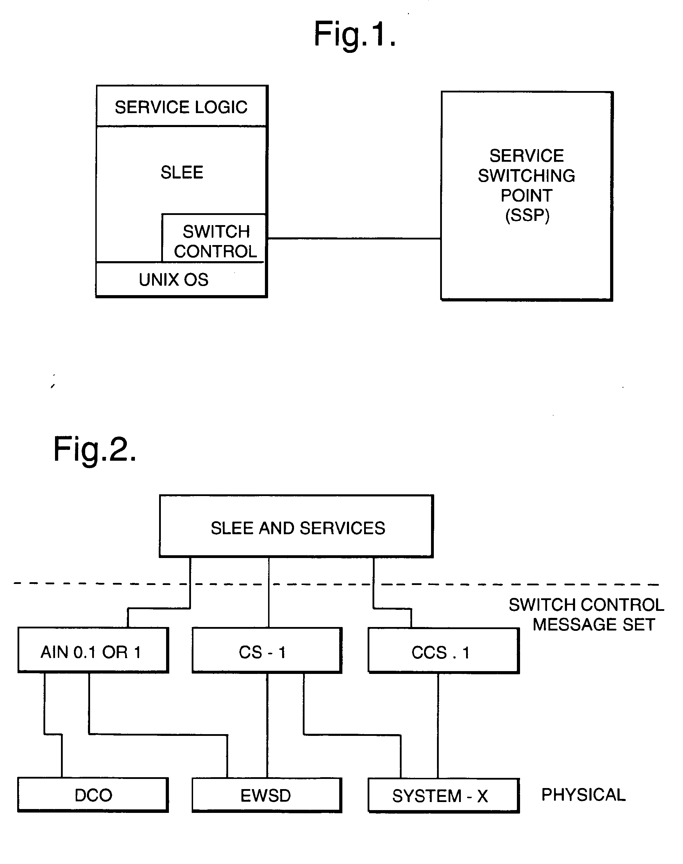

Figure 2 shows the typical configurations that will be produced in the different versions of the switch control.

The task of Switch Control is to convert messages between the block structure format used within the SLEE and the transfer syntax used for communicating with the switch.

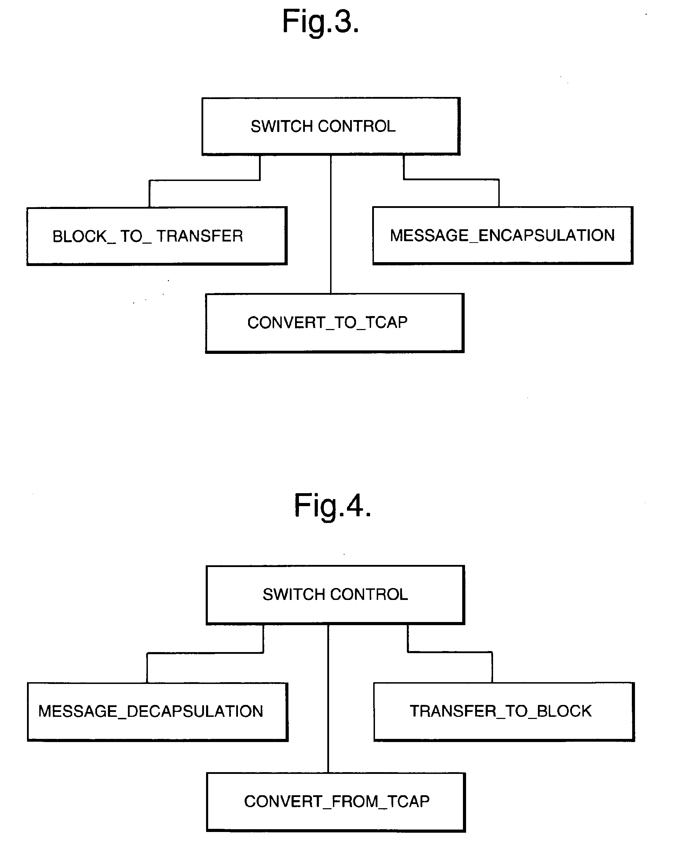

Switch Control achieves this by calling a number of functions which performs a different portion of the required conversion. Block diagrams showing the processing performed by Switch Control in both directions are shown in Figure 3.

The functions performed by these different blocks are:
Block_to_Transfer and Transfer_to_Block.

The message for transmission to the Switch is in a block structured format, which may be a C structure that contains all the parameters that make up the message. Block_to_Transfer converts this to a TCAP parameter set by establishing what parameters are actually present in the message, calculating their length, if necessary, and creating the corresponding TCAP elements.

Transfer_to_Block performs the reverse process, by passing through a TCAP parameter set establishing which parameters are present in the message and populating the required part of the Block structure message.

Both Block_to_Transfer and Transfer_to_Block are message set dependent.
Convert_to_TCAP and Convert_from_TCAP.

Convert_to_TCAP takes the TCAP parameter set generated by Block_to_Transfer and places it in a TCAP component portion which itself is added to a TCAP transaction portion. It sets all the necessary values within the Transaction and Component portions.

Convert_from_TCAP extracts the TCAP parameter set from the TCAP Transaction and Component portions, whilst correctly processing the data contained within the portions.

Convert_to_TCAP and Convert_from_TCAP are message set independent. They are however dependent on the version/incarnation of TCAP used. Different variants of the two routines would be used for different TCAP variants e.g. ANSI Issue 1, ANSI Issue 2, CCITT Blue Book, CCITT White Book.

### Message_Encapsulation and Message_Decapsulation.

These two routines add/remove the necessary header information for communication with the Switch to which the SLEE is connected. They handle the reception/transmission of the messages communicating with any hardware device drivers that might be present.

Message_Encapsulation and Message_Decapsulation are both Message set and TCAP variant independent. They are however switch dependent.

The overall dependencies of the various components are:

| | Message | TCAP | Switch |
|---|---|---|---|
| | Set | Variant | Dependent? |
| | Dependent? | Dependent? | |
| Block_to_Transfer | YES | NO | NO |
| Transfer_to_Block | | | |
| Convert_to_TCAP | NO | YES | NO |
| Convert_from_TCAP | | | |
| Message_Encapsulation | NO | NO | YES |
| Message_Decapsulation | | | |

This structure for Switch Control allows for the changing of any one of the components without affecting the any of the others. For instance to change a Switch Control that was using the CS-1 message set with Blue Book TCAP from a System-X implementation to an EWSD implementation the only area that would require changing would be the Message_Encapsulation/Message_Decapsulation.

### Glossary of Abbreviations and Terms

- AIN: Advanced Intelligent Networks
- ANSI: American National Standards Institution
- API: Application Programming Interface
- CCITT: Consultative Committee on International Telegraphy and Telecommunications
- CS-1: Capability Set 1. CCITT/SCP/SSP standard interface
- EWSD: Switch used in equipment supplied by Siemens AG (Trade Mark)
- OS: Operating System
- SCP: Service Control Point
- SLP: Service Logic Program
- SLEE: Service Logic Execution Environment
- SSP: Service Switching Point
- System-X: Digital switch used in equipment supplied by GPT Limited (Trade Mark)
- TCAP: Transaction Capabilities Application Part
- UNIX: A Computer Operating system. UNIX is a trademark of USL Inc.

## Claims

1. A telecommunications switching system comprising a Service Control Point and a Switch connected to one another, the Service Control Point including a Service Logic Execution Environment, Service Logic Programs and an Operating System, the Service Logic Execution Environment comprising a Switch Control and the rest of the Service Logic Execution Environment, the Switch Control forming an interface for the Service Logic Execution Environment and wherein means are provided whereby the rest of the Service Logic Execution Environment and the Service Logic Programs run above the Switch Control and whereby the rest of the Service Logic Execution Environment and Service Logic Programs are independent of the Switch to which they are connected and at least one of the components of the Switch Control is dependent on the Switch to which it is connected and the Service Logic Execution Environment is adapted to provide protection for the Service Logic Programs from changes in the Operating System wherein the Switch Control is adapted to convert messages between a block structure format used within the rest of the Service Logic Execution Environment and a transfer syntax for communicating with the Switch.

2. A telecommunications switching system, as claimed in Claim 1, wherein the Service Logic Execution Environment includes means to provide a higher level of functionality above the Operating System.

3. A telecommunications switching system, as claimed in Claim 1 or 2, wherein the Switch Control is adapted to handle the protocols and higher level messages between a Service Switching Point and the Service Control Point.

## Patentansprüche

1. Telekommunikationsvermittlungssystem, umfassend einen Dienstesteuerungspunkt und einen Vermittler, die miteinander verbundenen sind, wobei der Dienstesteuerungspunkt eine Dienstelogikausführungsumgebung, Dienstelogikprogramme sowie ein Betriebssystem enthält, die Dienstelogikausführungsumgebung umfassend eine Vermittlersteuerung und den Rest der Dienstelogikausführungsumgebung, die Vermittlersteuerung eine Schnittstelle für die Dienstelogikausführungsumgebung bildet, und wobei Mittel vorgesehen sind, wobei der Rest der Dienstelogikausführungsumgebung und die Dienstelogikprogramme über der Vermittlungssteuerung laufen und wobei der Rest der Dienstelogikausführungsumgebung und Dienstelogikprogramme unabhängig von dem Vermittler sind, mit dem sie verbunden sind, und mindestens eines der Komponenten der Vermittlersteuerung von dem Vermittler abhängig ist, mit dem es verbunden ist, und wobei die Dienstelogikausführungsumgebung angepasst ist für die Bereitstellung eines Schutzes für die Dienstelogikprogramme gegen Änderungen im Betriebssystem, wobei die Vermittlersteuerung angepasst ist für die Umsetzung von Nachrichten zwischen einem Blockstrukturformat, das in dem Rest der Dienstelogikausführungsumgebung verwendet wird, und einer Transfersyntax für die Kommunikation mit dem Vermittler.

2. Telekommunikationsvermittlungssystem nach Anspruch 1, wobei die Dienstelogikausführungsumgebung Mittel für die Bereitstellung einer höheren Ebene an Funktionalität gegenüber dem Betriebssystem.

3. Telekommunikationsvermittlungssystem nach Anspruch 1 oder 2, wobei die Vermittlersteuerung angepasst ist für die Abwicklung der Protokolle und Nachrichten höherer Ebene zwischen der Dienstelogikausführungsumgebung und dem Dienstesteuerungspunkt.

## Revendications

1. Système de commutation de télécommunications comprenant un point de commande de service et un commutateur connectés l'un à l'autre, le point de commande de service incluant un environnement d'exécution de logique de service, des programmes de logique de service et un système d'exploitation, l'environnement d'exécution de logique de service comprenant une commande de commutateur et le reste de l'environnement d'exécution de logique de service, la commande de commutateur formant une interface pour l'environnement d'exécution de logique de service et dans lequel des moyens sont prévus, moyennant quoi le reste de l'environnement d'exécution de logique de service et les programmes de logique de service fonctionnent au dessus de la commande de commutateur et moyennant quoi le reste de l'environnement d'exécution de logique de service et les programmes de logique de service sont indépendants du commutateur auxquels ils sont connectés et au moins un des composants de la commande de commutateur est dépendant du commutateur auquel il est connecté et l'environnement d'exécution de logique de service est adapté afin de fournir une protection aux programmes de logique de service contre des modifications du système d'exploitation, dans lequel la commande de commutateur est adaptée afin de convertir des messages d'un format de structure en blocs utilisé à l'intérieur du reste de l'environnement d'exécution de logique de service à une syntaxe de transfert pour communiquer avec le commutateur.

2. Système de commutation de télécommunications selon la revendication 1, dans lequel l'environnement d'exécution de logique de service inclut un moyen afin de fournir un niveau supérieur de fonctionnalité au dessus du système d'exploitation.

3. Système de commutation de télécommunications selon la revendication 1 ou 2, dans lequel la commande de commutateur est adaptée afin de gérer les protocoles et les messages de niveau supérieur entre un point de commutation de service et un point de commande de service.
